# EUROPEAN PATENT APPLICATION

(11) **EP 4 333 227 A1**
(43) Date of publication of application: **06.03.2024**
(21) Application number: 22192698.3
(22) Date of filing: 29.08.2022
(51) Int. Cl.: H02G 5/00, H01B 1/04, H01B 5/14

(54) **BUSBAR ASSEMBLY**

(71) Applicant: Newfrey LLC, New Britain, CT 06053 (US)
(72) Inventor: AKBARINIA, Alireza, 35394 Gießen (DE)
(74) Representative: SBD IPAdmin

(57) **Abstract**

Busbar assembly for an electric vehicle having a busbar for electric power distribution and a connector, wherein the busbar comprises a body made of a first conductive material, the body defining a recess in which a plurality of graphene layers is arranged, and in which the graphene layers contact the body.

## Description

The present invention relates to a busbar assembly for electrical power distribution in an electric vehicle. The field of the invention is more particularly that of hybrid or electric vehicles in which the energy is stored in a storage battery. An electric vehicle (EV) incorporates a hybrid set of technologies throughout its various systems. For example, there is an energy storage system that stores and distributes large amounts of electrical energy. The storage and distribution is controlled using high-performance semiconductor devices for very fast switching to drive an electric motor, among other purposes.

Busbars in general are well-known for electrical power distribution. Simply, a busbar is a metal strip or bar that conducts electricity and is used for electrical power distribution. Electrical distribution equipment, including switchboards, switchgears, and motor control centers, use busbars to connect circuit breakers and other protection equipment to loads.

Copper or aluminum bus bars have been used in industry for decades to connect large semiconductor modules to their associated capacitors, DC bus, and output bus. However, there is still a need to improve the conventional copper or aluminum busbars. US2012305283A1 for instance discloses a busbar comprising a plurality of layer. The busbar is a specialized formable low inductance high current capacity busbar blending power electronics and arrays of semiconductors and other devices into a single hybrid structure. Each busbar layer is made from a formed busbar material (e.g., copper, aluminum, or the like). Interposed between each bus bar layer is an electrically insulating dielectric, for example, a dielectric layer. Dielectric layer includes a film of polyester, Kapton, and the like that provides an insulating laminate layer appropriate for the voltage and current carried by the bus bar layers.

WO2022117438 discloses a busbar made of a bi-metal, and the bi-metal comprises copper and aluminum or a copper alloy and an aluminum alloy in order to reduce the costs.

Copper and aluminum are the two most common materials used in busbars. Copper is a heavy material, whereas aluminum does not have the same electrical performance than copper. The conductivity of the aluminum is lower than the conductivity of the copper. Therefore, combining both aluminum and copper materials may reduce the performance of the busbar compared to a classic copper busbar.

Substantial research efforts have been devoted to enhancing the conductivity of copper. Composite structures using Copper and Graphene, which possess improved electrical conductivity over copper alone are for instance known from US2018102197A1 and US2020294685A1. However, such composite structure are complex and not always shaped for any commercial applications.

It is an object of the present invention to provide an improved busbar with a reduced weight and a reduced cost without deteriorating the performances of the busbar. Accordingly, the present invention is directed to a busbar assembly for an electric vehicle according to claim 1. The busbar assembly has a busbar for electric power distribution and a connector. The busbar comprises a body made of a first conducting material. The body defines a recess in which a plurality of graphene layers is arranged, and in which the graphene layers contact the body. The graphene layer can contact the body directly or indirectly.

The graphene is thus coupled to the first conductive material. The first conductive material is a conventional busbar material, for instance copper or aluminum. Graphene is a one atom thick two-dimensional carbon material that is currently used in electrical, thermal and mechanical applications. The carbon atoms in graphene are covalently bonded in a honeycomb (hexagonal) lattice. Graphene is very thin and flexible, yet conductive. Any amount of graphene coverage or structure of graphene that will provide the desired enhancement of the electrical conductivity in the busbar can be used.

By combining several layers of graphene in parallel (such as for instance in the battery cell production technology), one can meet the same electrical property than copper.

Thus, the busbar assembly can have a decreased amount of copper or aluminum compared to conventional aluminum or copper busbars, but without decreasing the electrical property. The body is an outer body and is made of conventional conductive material, such that the integration of such busbars is easy to undertake. Besides, graphene has an electrical resistivity of 5 times lower than copper, and the electrical resistance of copper dependents on cross section, whereas it is not the case for the graphene. Finally, the graphene being lighter and cheaper than the copper for instance, the busbar assembly can have a reduced weight without increasing the size or the price of the busbar. On the contrary, the final product, using graphene can be several times smaller than a copper busbar. The busbar provides thus a high current capacity, low-inductance multilayer conducting structure.

In an embodiment, a separator is provided between each layer of graphene, and wherein the separator is made of electrical insulating material. The separator provides an insulating layer appropriate for the voltage and current carried by the busbar and more particularly by the graphene layers. The separator is as thin as possible while providing the insulating function in order to reduce inductance due to currents in the graphene layers.

In an embodiment, the separator is made of paper. Thus, the weight and the size are limited. The separator may also be a glue or a coating/paint material.

In an embodiment, the body comprises at least one wall delimiting the recess and strips protruding from the wall and inside the recess, and wherein the graphene layers contact the strips. Thus, the graphene layers are in contact with the strips made of conventional busbar material. The graphene layers are physically mounted to, and electrically coupled by the body, which acts as a foundation structure.

In an embodiment, at least one graphene layer comprises a first longitudinal portion which is in contact with at least one strip and a second longitudinal portion which is not in contact with a strip. The graphene layers are thus supported by the strip. The strip can provide some robustness. However, the strip does not support all the graphene layers on their entire length. The amount of first conductive material is thus reduced. In an embodiment, the graphene layers extend at a non-zero distance from the at least one wall. This allows a compact structure.

In an embodiment, the body is parallelepipedal and comprises a bottom, a top and a first and second lateral walls extending between the bottom and the top, wherein the bottom, the top and the two lateral walls define the recess, and wherein the strips protrude from the first and/or the second lateral wall. In an embodiment, each layer of graphene contacts a first strip protruding from the first lateral wall and a second strip protruding from the second lateral wall. The strips provide a support on the free end of the graphene layers.

In a further embodiment, the body has a thickness of less than 5 mm. Thus, a compact structure is achieved.

In a further embodiment, in a cross-section, the recess has a recess length Lr, the separator has a separator length Ls and the graphene layers have a graphene length Lg. The graphene length is smaller than the separator length, and wherein the separator length is smaller than the recess length.

In an alternative embodiment, the body is cylindrical, and the graphene layers are arranged concentric to each other.

In an embodiment, an electrical insulating separator is provided at the middle of the cylinder. The core of the cylinder is made of a separator.

In an embodiment, the separators between each layer of graphene are arranged concentric to each other.

In an embodiment, the first conductive material is copper. The combination of copper and graphene allows good electrical performance.

The invention and its advantages will be better understood from the reading of the following description, given by way of example only and with reference to the accompanying drawings, of which:
Fig. 1 shows a perspective view of a busbar assembly according to a first embodiment with a busbar having a parallelepipedal body and a connector;
Fig. 2A shows a schematic perspective view of a busbar assembly according to a second embodiment with a busbar having a cylindrical body and a connector, the different layers of the busbar being schematically uncovered for a better understanding;
Fig. 2B shows the busbar assembly of Fig. 2A in a cross-section.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

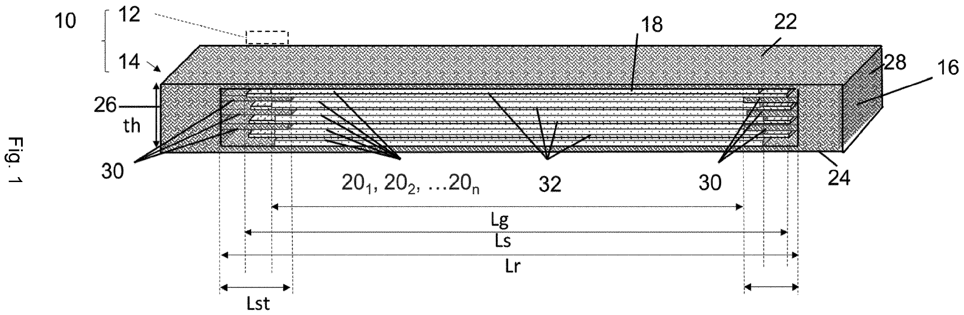

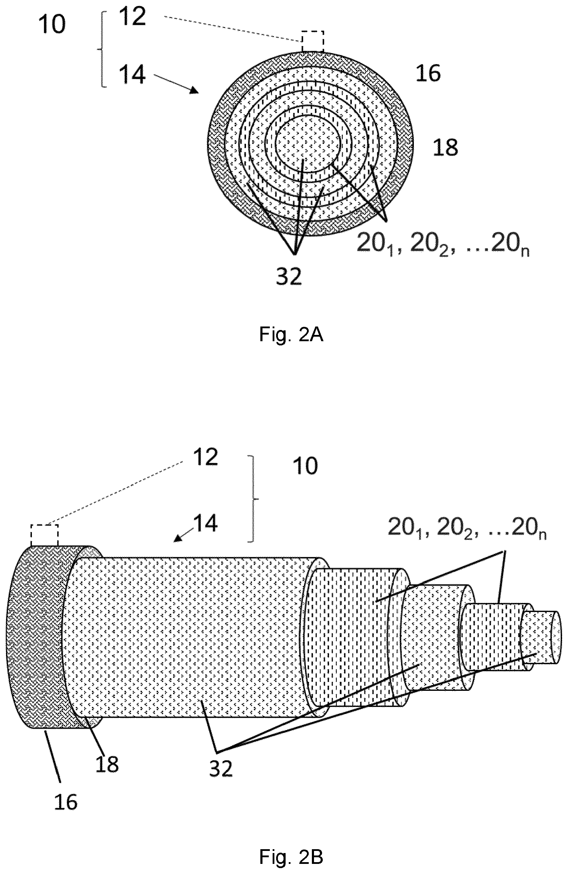

Fig. 1, Fig. 2A and Fig. 2B show a busbar assembly 10. The busbar assembly 10 comprises a connector 12 and a busbar 14 for electric power distribution. The connector 12 is adapted to electrically connect the busbar 14 to a battery component or any other component.

The busbar 14 comprises a body 16 made of a first conductive material. The first conductive material may for instance be copper, aluminum or the like. In a preferred embodiment, the first conductive material is copper. The body 16 defines a recess 18, and a plurality of layers of graphene 201, 202, ...20n extends inside the recess. The layers of graphene 201, 202, ...20n are in contact, direct or indirect with the body 16.

In Fig. 1, according to a first embodiment, the body 16 has a parallelepipedal shape with a top wall 22, a bottom wall 24 and a first and second lateral wall 26, 28 extending between the top wall and the bottom wall. The top 22, the bottom 24 and the first and second lateral walls 26, 28 define the recess 18. The recess 18 has for instance, as depicted in Fig. 1 a rectangular shape in a cross-section. However, in other embodiment, the recess 18 may have other shapes. The body 16 comprises a plurality of strips 30. The strips 30 may be integral with the walls 22, 24, 26, 28. In another embodiment, the strips are not integral with the walls, but fixed to the walls. The strips 30 can extend from the first and/or the second lateral wall 26, 28 into the recess 18. For instance, a plurality of first strips 30 are arranged on the first lateral wall. A plurality of second strips 30 are also arranged on the second lateral walls. The strips 30 protrude inside the recess 18, but the length of the strips Lst is smaller than the length of the recess Lr. More particularly, first and second strips 30 are not in contact with each other, a gap exists between the strips extending from the first lateral wall 26 and the strips extending from the second lateral wall 28.

A first and a second strip 30 may support a graphene layer 201, 202, ...20n. More particularly, a plurality of graphene layers 201, 202, ...20n is arranged in the recess 18. The graphene layers 201, 202, ...20n extend parallel to each other. The graphene layers 201, 202, ...20n are supported on one side by the first strips and or the other side by the second strips. Between each layer of graphene 201, 202, ...20n, a separator 32 is arranged. The separator 32 is made of insulating material. The separator 32 is for instance a layer of paper. Fig. 1 schematically shows few layers of graphene. However, the number of graphene layer may be up to thousand layers.

As schematically depicted in Fig. 1, a first layer of graphene 201 may rest on the bottom wall 24. A separator 32 is arranged above the first layer of graphene 201. A second layer of graphene 202 is arranged above the separator 32. The second layer of graphene 202 may contact at a first end a first strip, and at a second end, a second strip. Thus, the second layer of graphene 202 comprises a first longitudinal portion which is in contact with the first strip, a second longitudinal portion which is not in contact with a strip, and a third longitudinal portion which is in contact with the second strip. Above the second layer of graphene 202 and the strips, another separator 32 is arranged. A third layer of graphene 203 is then stacked (or piled up) on said another separator. Similarly to the second layer of graphene, the third layer of graphene 203 contacts at a first end a second first strip and at a second end a second second strip. The stacking of graphene layers 201, 202, ...20n and separator 32 and strips 30 continues in the same way up to the top wall 22, the last layer of graphene 20n contacting the top wall 22. All the graphene layers 201, 202, ...20n are thus in contact with the first conductive material and are all separated by a separator.

The body may for example have a thickness th of less than 5 mm, for instance of about 3 mm. In a cross-section, the recess has a recess length Lr, the separator has a separator length Ls and the graphene layers have a graphene length Lg. The graphene length Lg is smaller than the separator length Ls. The separator length Ls is smaller than the recess length Lr.

Fig. 2A and Fig. 2B show the busbar assembly according to a second embodiment. The body 16 is cylindrical and has a circular cross-section. The body 16 defines a cylindrical recess 18. The graphene layers 201, 202, ...20n are parallel and arranged concentric to each other inside the recess. An electrical insulating separator is provided at the middle of the cylindrical body. Between each layer of graphene 201, 202, ...20n, a separator 32 is arranged. The separators 32 are also arranged concentric to each other and to the graphene layers. The body may contact directly a first layer of graphene or, as represented may be in surface contact with a separator. Strips 30 are arranged such as to connect each layer of graphene to the body. The separators 32 are made of insulating material. The separators are for instance a layer of paper.

In the embodiments of Fig. 1 and Fig. 2A, the separators 32 may have a thickness of about 5 to 30 micrometers. The graphene layers have a thickness of 100 nanometers to 10 micrometers. The strips may have a thickness of about 10 to 100 micrometers.

The busbar assemblies 10 described above may for example be used in a battery system. The busbar is connected via the connector 12 to at least a battery component.
busbar assembly 10
connector 12
busbar 14
body 16
recess 18
layers of graphene 201, 202, ...20n
top wall 22
bottom wall 24
first and second lateral wall 26, 28
strips 30
length of the strips Lst
length of the recess Lr
separator length Ls
graphene length Lg
body thickness th
separator 32

## Claims

1. Busbar assembly (10) for an electric vehicle having a busbar (14) for electric power distribution and a connector (12), wherein the busbar comprises:
a body (16) made of a first conductive material, the body defining a recess (18) in which a plurality of graphene layers (201, 202, ...20n) is arranged, and wherein the graphene layers (201, 202, ...20n) contact the body (16).

2. Busbar assembly (10) according to claim 1, wherein a separator (32) is provided between each layer of graphene (201, 202, ...20n), and wherein the separator is made of electrical insulating material.

3. Busbar assembly (10) according to claim 2, wherein the separator (32) is made of paper.

4. Busbar assembly (10) according to any of claims 1 to 3, wherein the body (16) comprises at least one wall (22, 24, 26, 28) delimiting the recess (18) and strips (30) protruding inside the recess, and the graphene layers (201, 202, ...20n) contact the strips.

5. Busbar assembly (10) according to claim 4, wherein each graphene layer (201, 202, ...20n) comprises a first longitudinal portion which is in contact with at least one strip and a second longitudinal portion which is not in contact with a strip.

6. Busbar assembly (10) according to claim 4 or 5, wherein the graphene layers (201, 202, ...20n) extend at a non-zero distance from the at least one wall (22, 24, 26, 28).

7. Busbar assembly (10) according to any of claims 4 to 6, wherein the body (16) is parallelepipedal and comprises a bottom (24), a top (22) and a first and second lateral walls (26, 28) extending between the bottom and the top, wherein the bottom, the top and the two lateral walls define the recess, and wherein the strips protrude from the first and/or the second wall.

8. Busbar assembly (10) according to claim 7, wherein each layer of graphene (201, 202, ...20n) contacts a first strip protruding from the first lateral wall (26) and a second strip protruding from the second lateral wall (28).

9. Busbar assembly (10) according to claim 6 or 7, wherein the body (16) has a thickness of less than 5 mm.

10. Busbar assembly (10) according to claim 2 and to any of claims 1 to 9, wherein in a cross-section, the recess (18) has a recess length Lr, the separator has a separator length Ls and the graphene layers have a graphene length Lg, and wherein the graphene length is smaller that the separator length, and wherein the separator length is smaller than the recess length.

11. Busbar assembly (10) according to any of claims 1 to 7, wherein the body is cylindrical, and the graphene layers (201, 202, ...20n) are arranged concentric to each other.

12. Busbar assembly (10) according to claim 10, wherein an electrical insulating separator (32) is provided at the middle of the cylinder.

13. Busbar assembly (10) according to any of claims 1 to 12, wherein the first conductive material is copper.
